Europäisches Patentamt

European Patent Office

Office européen des brevets

(11) Publication number: **0 056 285**
**B1**

# EUROPEAN PATENT SPECIFICATION

(45) Date of publication of patent specification: **02.07.86**

(51) Int. Cl.⁴: **H 02 G 1/04**

(21) Application number: **82100232.6**

(22) Date of filing: **14.01.82**

(54) **Improved method of stringing high-tension electric power lines, and device for performing the method.**

(30) Priority: **14.01.81 IT 1911981**

(43) Date of publication of application:
**21.07.82 Bulletin 82/29**

(45) Publication of the grant of the patent:
**02.07.86 Bulletin 86/27**

(84) Designated Contracting States:
**AT BE CH DE FR GB LI LU NL SE**

(56) References cited:
**DE-B-1 059 523**
**US-A-3 195 862**
**US-A-3 276 744**

(73) Proprietor: **TESAUT S.p.A.**
**Via Lattanzio, 23**
**I-20137 Milano (IT)**

(72) Inventor: **Saracini, Alessandro**
**Via della Camilluccia, 647**
**I-00135 Roma (IT)**

(74) Representative: **Faggioni, Giovanmaria, Dr. et al**
**Fumero-Studio Consulenza Brevetti**
**Widenmayerstrasse 4/I**
**D-8000 München 22 (DE)**

Courier Press, Leamington Spa, England.

## Description

As is well known to all experts in the construction of electric power lines, the usual modern method of stringing electric conductors, either singly or in bundles, on pylons is the "controlled tension" method using "pilot cords" in the initial stage.

Pilot cords are light cables of synthetic material such as nylon, which make it easier to position them on pylons, whereas haulage cables are normally made of steel and relatively heavy capable of withstanding considerable tension and torques. In the following description and claims with the expression "first haulage cable" is meant either a pilot cord or a haulage cable according to the above definition.

In the more conventional method, the pilot cord is first substantially stretched at ground level and then raised and conveyed over the pulleys suspended from the successive pylons in the line and then tensioned.

The actual stringing operation begins only after the pilot cord has been tensioned and is consequently between two pylons along the line and normally comprises the following stages.

The pilot cord is recovered from one end whereas the other end is coupled to a haulage cable which, together with the pilot cord is maintained under constant tension and is therefore always raised from the ground. The haulage cable is thus moved forward and progressively takes the place of the pilot cord on the pulleys.

Next, the haulage cable is recovered from one end whereas the other end is coupled to the electric conductor or bundle of conductors which, together with the haulage cable, are as before kept under constant tension and raised from the ground. The conductors are thus moved forward and progressively take the place of the haulage cable on pulleys. Finally, the pulleys conveying the pilot cord, haulage cable and conductors are replaced by known suspension insulators, to which the conductors are finally and permanently attached.

This method encounters considerable difficulties which may readily be understood and are well-known to those skilled in the art. They relate to the initial tensioning of the pilot cord and to the stringing of the haulage cables and conductors under constant tension.

The invention is mainly concerned with the problems and difficulties of stringing the pilot cord resp. the first haulage cable. Although the stringing process is relatively easy in flat open ground, it becomes more difficult if the route of the line goes through crops, which will inevitably be damaged or woods, in which case it will be necessary to cut down entire lines of trees, particularly those with high trunks. The difficulties will be correspondingly greater if the route is still more irregular, as is frequently the case in mountainous regions or where the line crosses other structures such as streets, rivers, power lines, built-up areas or the like.

In an attempt to obviate these difficulties and the associated long periods of work, it has been proposed to use helicopters to string the pilot cords or the haulage cables. A helicopter moves along the route of the line above the pylons and gradually unwinds the pilot cord, which is conveyed by operators on the pylons over pulleys suspended therefrom or automatically runs on specially-shaped pulleys.

After the pilot cords have been string by the aforementioned method, the haulage cables followed by the conductors and/or bundles of conductors are string under constant tension in the aforementioned manner.

This method of stringing the pilot cords has the great advantage of reducing damage to vegetation along the route and thus shortening the time required, but is not free from disadvantages.

But the helicopter pilots have to be particularly skilful, firstly because the helicopter motion is opposed by the pilot cord, which is at least partly under tension; secondly because the pilot cord must be positioned on the pylons with high accuracy so that the operators can secure it or so that it can automatically run on the special pulleys; thirdly, owing to the need for accuracy, the helicopter has to fly at a very low altitude over the pylons or even remain still, with evident difficulty and danger; and last but not least, since the most important electric lines normally have six conductors or six bundles of conductors suspended from six brackets disposed at three different levels separated by several metres from one another, the difficulty and risk are multiplied by a factor of six (since one pilot cord has to be positioned for each conductor or bundle of conductors and one for the guard cable), or sometimes by an even higher factor if the helicopter, in order to accompany the pilot cords nearly as far as the lowest brackets, has to descend to an altitude at which the rotor blades are dangerously near the tip of the pylon or actually below it.

Of course, there is also the difficulty of manipulating large quantities of pilot cords and haulage cables. The helicopter and crew have to work for a long time, resulting in high depreciation and investment costs. For these reasons the aforementioned method and expenses are restricted to the most important lines for particularly difficult routes.

The DE—B—1059523 already proposes a process eliminating at least partly these problems. This patent proposes in fact to use a haulage cable for stringing a conductor (or bundle of conductors), jointly with some other auxiliary haulage cables, along a first set of pulleys, each of which comprises as many sheaves as there are conductors and haulage cables to be simultaneously stringed. Once this first stringing has been carried out, the auxiliary haulage cables are drawn out of the pulleys and each transferred onto a respective further set of pulleys, in order to string corresponding conductors or bundles of conductors. The transfer of the auxiliary haulage cables from one set of pulleys to another is carried out manually.

Compared to previous technique, the process according to the DE—B—1059523 has the advantage of allowing to string several haulage cables starting from a first haulage cable, which is positioned onto the pulleys in a traditional manner. Nevertheless, this process still suffers from serious limitations. First of all, it does not allow to position the pilot cord or first haulage cable by helicopter, since on one hand the pulleys employed are not suited for this purpose, and on the other hand the pulley onto which the first haulage cable is positioned is the lowest one of the pylon and thus involves, also on account of its position, the already mentioned difficulties for the helicopter operation.

The object of the present invention is therefore to carry out a method for stringing high-tension electric power lines on a set of pylons, which allows, on one hand, to operate in an extremely facilitated way by means of a helicopter, which is merely due to position pilot cord on the highest part of the pylons of the line, and on the other hand, to perform the positioning of the different haulage cables, and thus of the conductors, corresponding to all the pulleys, in an automatic manner, namely without any manual operations for transferring a haulage cable from one set of pulleys to another.

Thus the invention refers to a method, in which a first haulage cable is disposed on a first set of pulleys having corresponding positions on the pylons; one end of the first haulage cable is coupled to one or more further haulage cables by one or more balanced connecting members; the first haulage cable is recovered from the other end of the set of pylons by running it over the first set of pulleys thereby laying one of the hauled cables on those pulleys and laying the other hauled cables in positions on the set of pylons from which each is transferable to a respective set of further sets of pulleys to be used for drawing further cables.

The method according to the invention is characterized in that the pulleys of said first set of pulleys are mounted on the top of the pylons and, while the balanced connecting members move over the top pulleys and said one of the hauled cables is guided into the race of each pulley and rests on them, said further hauled cables are made to slide downwards only by force of gravity and traction until each of them, with the assistance of swivel-mounted guide means, positions itself on a set of pulleys suspended from pylon bracket underneath the cable on the first set of pulleys.

As can easily be seen, the method according to the invention greatly reduces and simplifies the preparatory work for stringing the haulage cables. The conventional method has to be used only for positioning a single pilot cord or first haulage cable, more particularly the cable for pulling the guard cable or conductor at the highest level, whereas all the other haulage cables, i.e. those underneath, are automatically positioned during the progress of the work of stringing the line. It can also easily be understood that in such cases the use of a helicopter, which is limited to a single cable disposed at the top of the pylons, becomes much easier and more rapid and is therefore quite economic and justifiable even on lines of secondary importance. This reduces the damage to vegetation underneath and the time taken for the work.

Other advantages of the method according to the invention will be clearer from the following description of some preferred embodiments, given by way of example only and illustrated in the accompanying drawings, in which:

Figs. 1 to 4 show a pylon having six brackets distributed at three levels, during four successive stages of the stringing of a guard cable and two other haulage cables, starting from a first haulage cable;

Figs. 5 to 7 show the same pylon during four successive operating stages showing the stringing of the haulage cables and bundles of conductors underneath;

Fig. 8 shows the same pylon with seven brackets, fitted up in accordance with a variant of the system according to the invention;

Figs. 9 to 11 show three successive steps in stringing conductors on a pylon with three brackets distributed at three different levels in an asymmetrical arrangement;

Figs. 12 to 14 show three successive steps in stringing conductors on a Y-type pylon;

Fig. 15 diagrammatically shows a pulley for use in applying the method according to the invention, more particularly for tensioning a bundle of three conductors;

Figs. 16a, 16b, 17a and 17b show some constructional details of the top of the pylon in Fig. 1, and

Figs. 18a and 18b are views in plan and elevation respectively of a balanced connecting device connecting the haulage cable to the bundle of conductors, with an attachment for an additional haulage cable.

As shown, a pulley 2 is mounted in freely rotatable manner at the top of a pylon 1 for a high-tension power line. A pilot cord (not shown) is disposed in conventional manner on pulley 2 and on all the other pulleys in the subsequent pylons along the line.

Preferably the pilot cord is laid by a helicopter, which can advantageously be used even for secondary lines, owing to the saving in time and the reduction of damage to the crops underneath. The reasons for this wider application, which have already been set out, are as follows:

only a single pilot cord has to be laid, and

it is laid at the highest point of the pylon, thus clearly reducing and simplifying the work of the helicopter.

The invention, however, also includes the possibility of using, not the helicopter but the conventional methods of manually stringing the pilot cord, in which case all the advantages of the invention will likewise be obtained, as shown more clearly hereinafter, except of course for the speed of stringing the pilot cord or first haulage cable, which requires the use of a helicopter.

The top pilot cord is then recovered from one end by running it over the pulleys, whereas the other end is attached to a first haulage cable which, according to the conventional method as before, progressively takes the place of the pilot cord on the pulleys.

This may be regarded as the end of the preparatory stage before stringing all the other haulage cables for the other conductors of the line. The preparatory stage may be further greatly simplified at least in certain cases, by initial direct manual stringing of the first haulage cable.

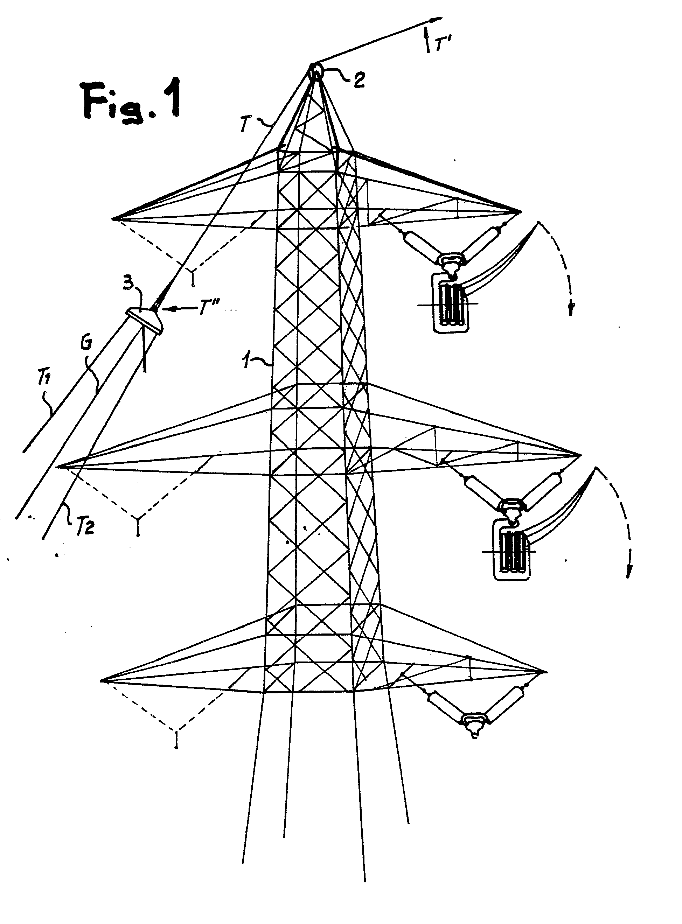

Fig. 1 shows the next stage, the beginning of the recovery of the pilot cord and haulage rope T and the drawing of the guard cable G. The end T' of cable T is pulled, e.g. by a winch, whereas the opposite end T" is secured to a balanced connecting device 3, the shape of which is more clearly shown in Fig. 18.

Device 3 is secured—at least in the initial stage and in the case of a line of pylons as in Fig. 1—to the guard cable G to be strung, which is secured centrally on member 3, or to two further haulage cables T1 and T2 secured at the sides, for this purpose described hereinafter.

As shown in Fig. 18, member 3 comprises a main attachment plate 3a, one side of which is centrally secured to a chain 3b, all the links of which have a horizontal axis. The free end of chain 3b is secured to the first haulage cable T by a freely rotating attachment 3c.

On the other side of plate 3a there are three attachments 3d, 3e and 3f, preferably also rotatable, for securing the guard cable G and further haulage cables T1 and T2.

Another rotatable attachment 3g is secured to chain 3b and connected to a cable T3 which is deflected to the exterior of plate 3a by stirrups 3h, the function of which will be more clearly explained hereinafter.

Member 3 also comprises a counter-weight 3i secured below plate 3a near the central attachment 3d and comprising a chain having horizontal links.

During the recovery of first haulage cable T, counter-weight 3i holds plate 3a substantially horizontally, aided by the fact that the freely rotatable attachments 3c to 3f absorb any torsional stresses applied to the cables. When member 3 moves over pulley 2, chains 3b and 3i hold member 3 in the central position since, owing to the horizontal links, chains 3b and 3i fit into the arcuate groove of the pulley.

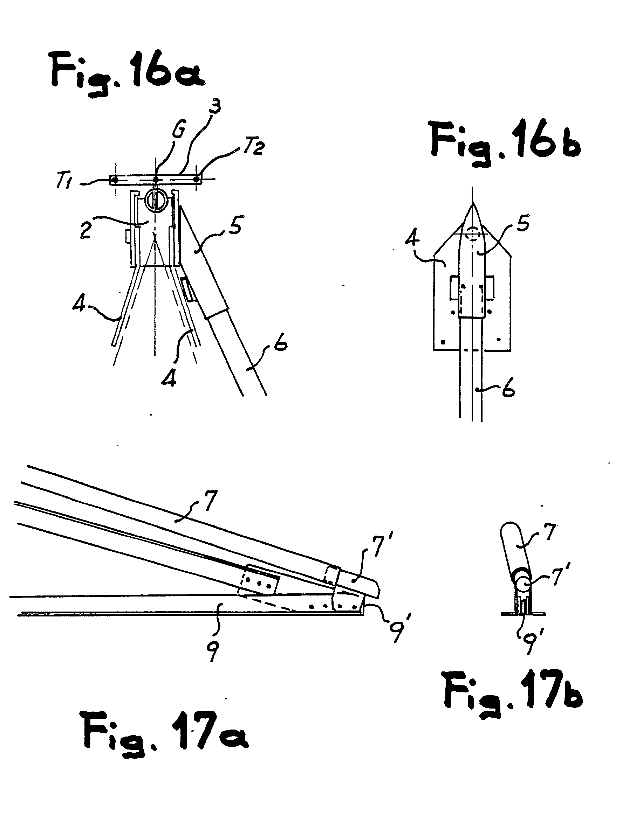

As a result, the guard cable G is directly and safely guided over pulley 2, whereas haulage cables T1 and T2 are pulled to the outside and slide over the sides of pulley 2 downwards. Fig. 16a shows the moment when member 3 is moving over pulley 2 and the guard cable G is centered on the pulley whereas cables T1 and T2 are at the sides thereof.

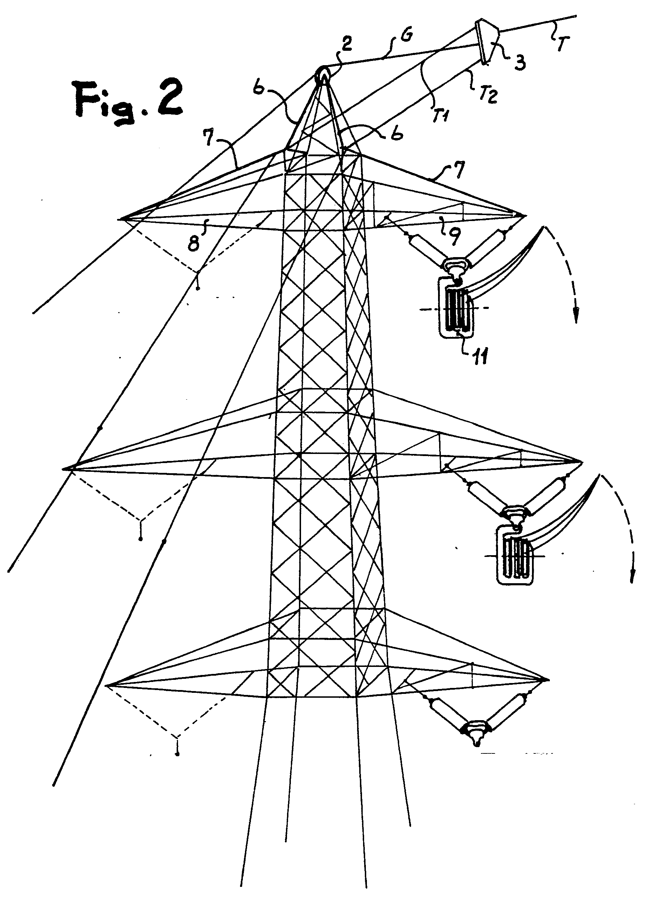

As shown in Fig. 2, in proportion as member 3 moves away from pylon 1 the two haulage cables T1 and T2 move downwards over the sides of the top of the pylon. To facilitate this descent and downward motion and to protect the pylon structure, rods 5 having a pointed tip are secured to the sides of the holder 4 of pulley 2, as shown in Figs. 16a and 16b. Each rod 5 extends downwards in a tubular guide 6 which, owing to its round cross-section, facilitates the motion of haulage cables T1 and T2 downwards and in the direction in which the cables are pulled.

In an alternative embodiment, guide 6 can be a roller freely rotatable around its longitudinal axis relative to rod 5 and to another holder (not shown) at the opposite end.

As Fig. 2 shows, guides 6 which, as stated, comprise bars or rollers, extend downwards to near the base of the tip of pylon 1, where they are connected to other guides 7 which likewise are inclined downwards but with a gentler slope and extend to above brackets 8 and 9 of pylon 1.

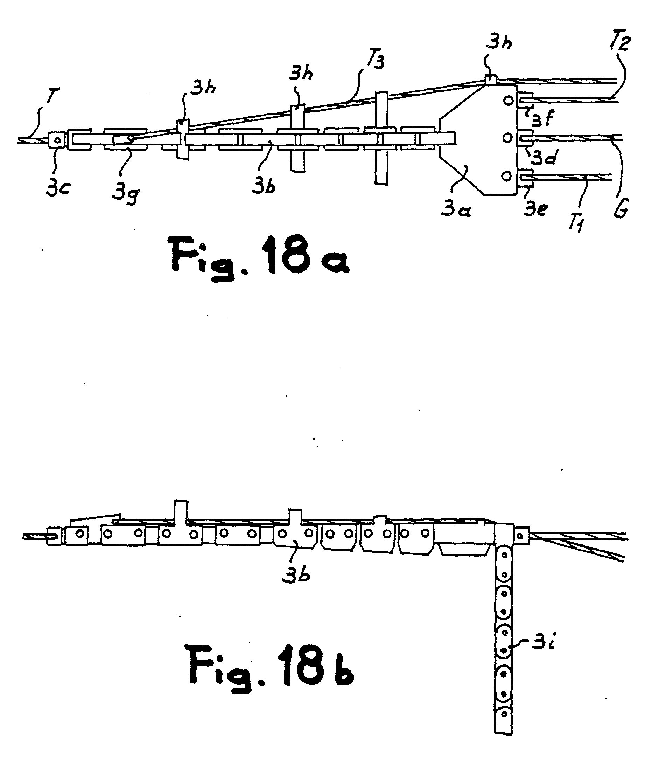

As shown in greater detail in Figs. 17, guides 7 also comprise tubular elements, more preferably rollers freely rotatable around their respective longitudinal axis and terminating in a round, bevelled rod 7' projecting slightly beyond the end 8' or 9' of bracket 8 or 9.

In an alternative embodiment (not shown) guides 6 and 7 can be replaced by a single straight or curved guide extending from the top rod 5 to the rod 7' at the end of the bracket.

According to yet another variant, the single guide can comprise a steel cable stretched between the topmost part of the pylon and the ends 8' or 9' of the brackets.

The downward motion of haulage cables T1 and T2 is not instantaneous, even if the inclination of guides 6 and 7 is very steep, but progressive, in proportion as member 3 moves away from pylon 1. The reason is that, as long as member 3 is near the pylon, the weight of the haulage cables, which controls the downward motion, is offset by the pull on the cables, towards member 3, i.e. towards the central axis of the line.

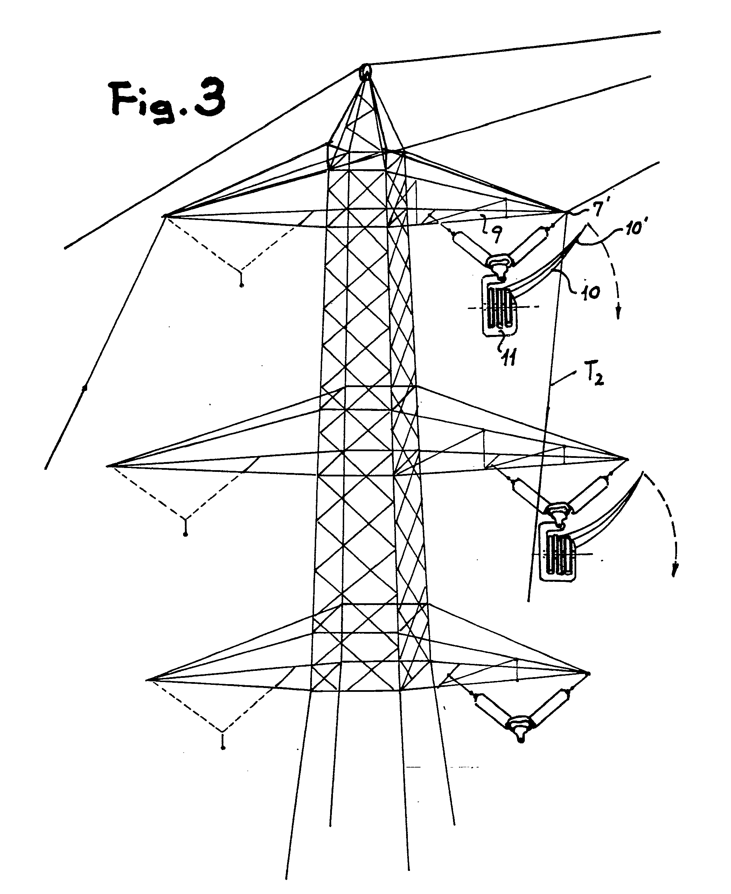

When member 3 moves away, therefore, haulage cables T1 and T2 progressively move downwards until they meet the end rods 7'. This is the position shown in Fig. 3. At this stage the haulage cables fall abruptly down. Note that the fall is not absolutely vertical but inclined towards the axis of pylon 1. This is because each cable is subjected to two opposing forces—on the one hand the resistance of the cable itself and the associated conductor, which acts substantially parallel to the line, and on the other hand the tension which, owing to the relative nearness of member 3 to the pylon, is exerted towards the central axis of the line.

A guide arm 10 is disposed below the end of the bracket and has a tip 10' projecting beyond rod 7'. When cable T falls, it is collected by arm 10, which is inclined towards the interior and thus guides it towards pulley 11 suspended from the bracket.

Pulley 11 has an "open" shape, e.g. as

**0 056 285**

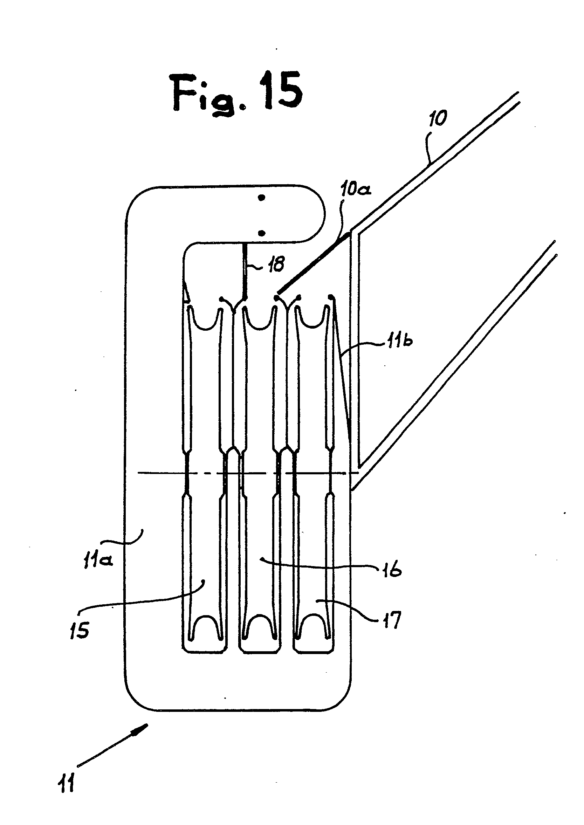

illustrated in Fig. 15. As Fig. 15 shows, the pulley frame 11a has a substantially C- or G-shape, i.e. a rectangular structure open at the top of one side. One or more wheels or sheaves are rotatably mounted on the frame in order to convey a conductor or bundle of conductors. In the illustration there are three sheaves 15, 16 and 17.

The central sheave 16 initially conveys the haulage cable, followed by the transmission member 3, each sheave conveying one conductor from the bundle.

As shown in Fig. 15, arm 10 is shaped so that one end thereof 10a, which prolongs its top edge, terminates at the bottom, under operating conditions, level with the edge of the central sheave 16 as shown. Consequently when the further haulage cable, which has fallen from the top bracket, slides along arm 10, it can slide sideways into the frame of pulley 11 and be directly positioned in the groove of the central sheave 16. A stop arm 18 prevents the cable from sliding beyond sheave 16 towards sheave 15.

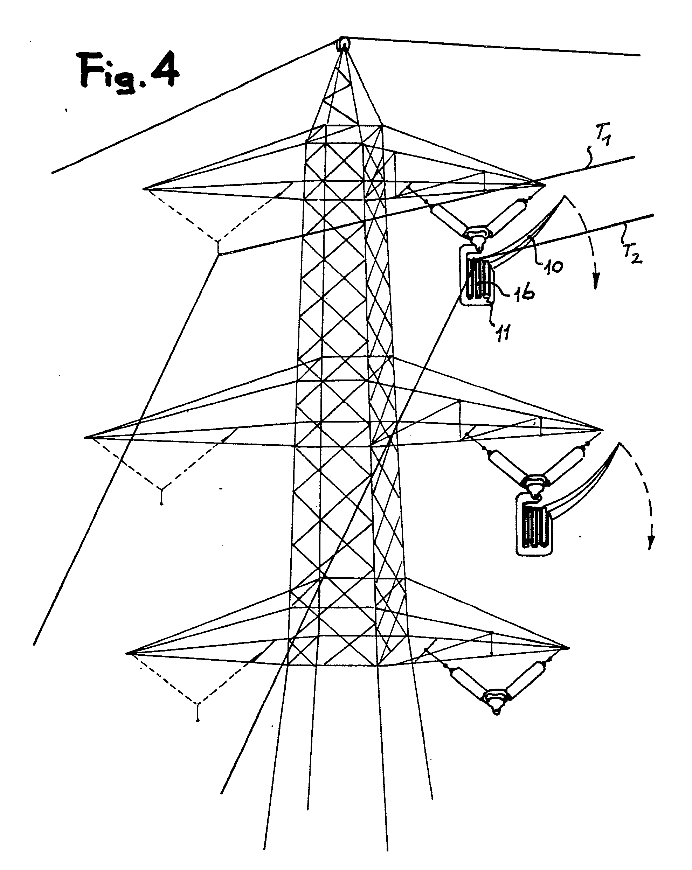

Fig. 4 shows the final or arrival position of the further haulage cable T2 when it is properly positioned and centred on the pulley 11 of the top bracket in the pylon.

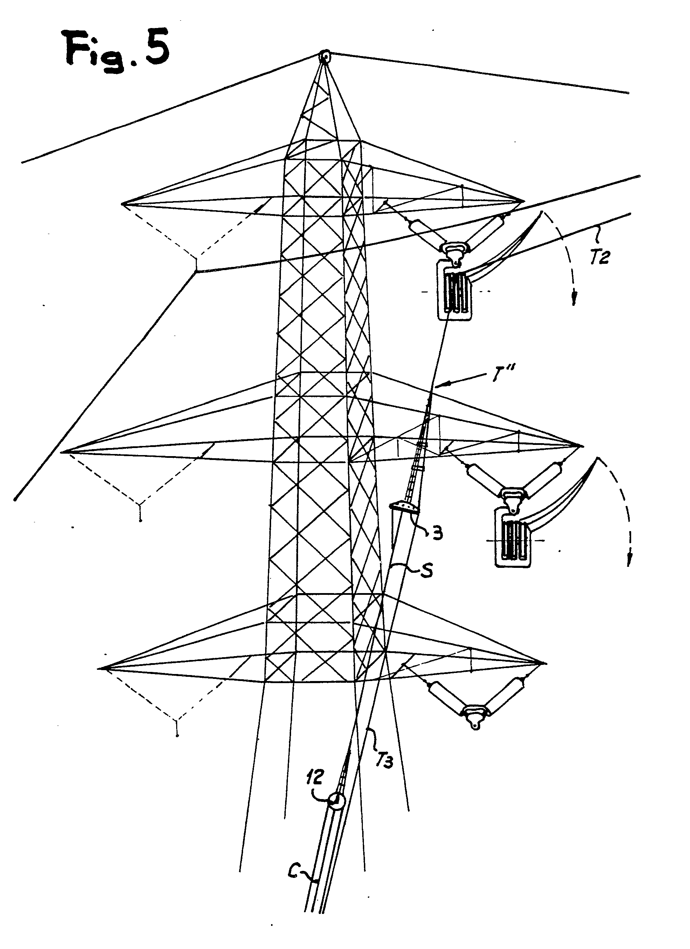

The next stage of operation is shown in Fig. 5, which shows that the end T″ of the further haulage cable T2 is coupled to a balanced connecting member 3 which is coupled to the following:

in the central position member 3 is coupled by attachment 3d to a service cord S, the other end of which is connected to a conventional transmission member 12 for a bundle of three conductors C.

in the lateral position, member 3 is coupled to another haulage cable T3, which is secured to the attachment 3g of member 3 shown in Fig. 18a and is guided over the ends of stirrups 3h.

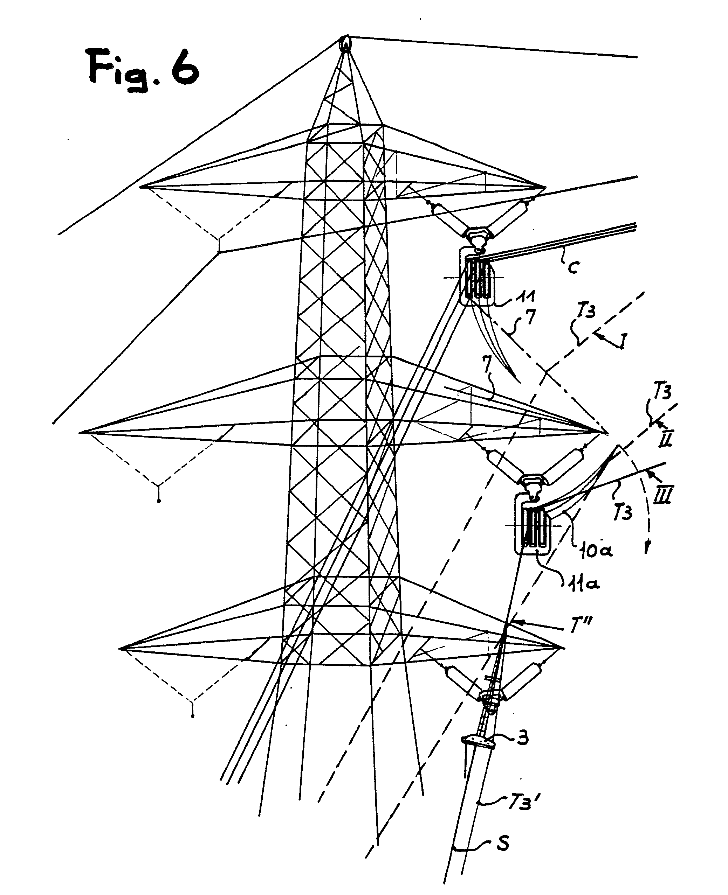

Before member 3 reaches the pulley, arm 10 is tilted downwards, e.g. into the position shown in Fig. 6.

When member 3 reaches the pulley, cord S takes the place of the haulage cable T2 on the central sheave 16. At the same time, haulage cable T3 is drawn beyond the outermost sheave of pulley 11 and, owing to the absence of arm 10 which has been tilted downwards, runs along the side 11b and falls freely downwards.

As shown in Fig. 6, during the pulling of the bundle of conductors C, each positioned on a sheave 15, 16, 17 of pulley 11, the haulage cable T3 is falling towards the bracket 9a underneath and bears on a guide 7. Guide 7 is secured to bracket 9a in a manner completely similar to the guide 7 associated with the top brackets 8, 9. Alternatively, guide 7 can be mounted so as to slide between the end of the bracket underneath and the base of the pulley, as shown by a chain-dotted line in Fig. 6, in which case guide 7 can also stabilize the pulley. In both cases, the haulage cable T3 falls and abuts the guide underneath owing to the fact that the bracket projects externally beyond the vertical axis of the pulley 11 underneath.

Fig. 6, accordingly, shows the bundle of three conductors C, which now rest in the pulley 11 of the uppermost bracket, after the transmission member 12 and haulage cable T3 have passed over pulley 11 in three successive positions as follows:

in position I, indicated by chain lines, which cable T3 takes up immediately after it has moved along guide 7;

in position II, indicated by chain lines, which cable T3 takes up after sliding along guide 7 and falling below rod 7′, i.e. against arm 10a, and

in position III, indicated by a continuous line, which cable T3 takes up after sliding along arm 10a and entering pulley 11a.

During the pulling of the bunch of conductors C over the highest pulley 11, cable T3 is also pulled over the pulley 11a underneath. At the moment when member 3 reaches the pulling station, the bundle of conductors C and cable T3 have been completely strung. At this point, pulling begins on cable T3, which is associated with another balanced connecting member and another bundle of conductors. Fig. 6 shows member 3 arriving near pulley 11a. Member 3 is coupled to a service member S for pulling a transmission member 12 (not shown) for another bundle of conductors and to another haulage cable T3′ secured to attachment 3g.

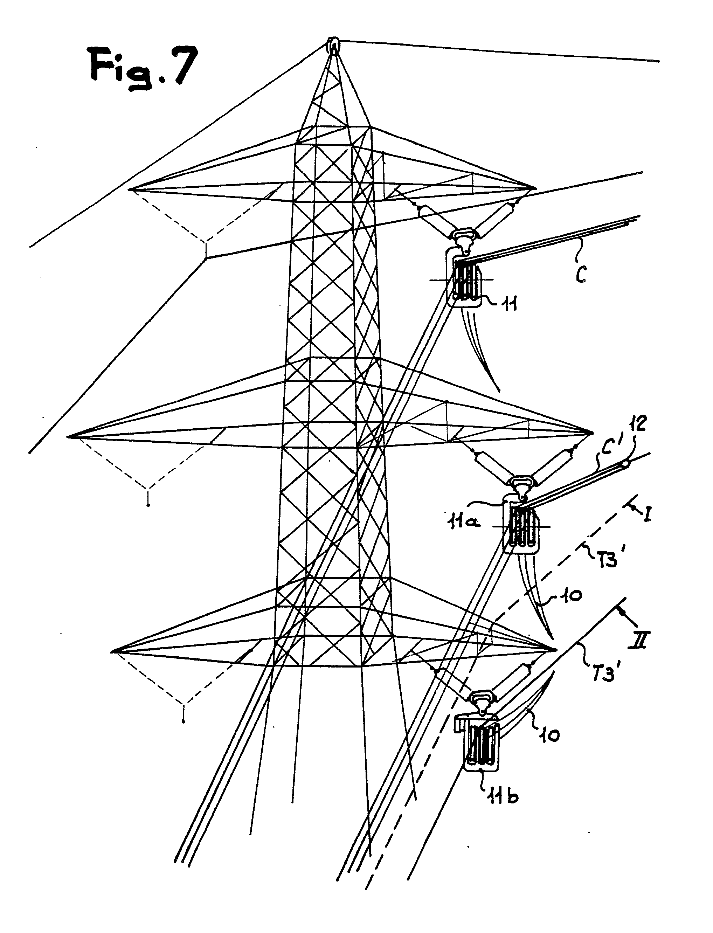

Finally, Fig. 7 shows the stage when the bundle of conductors C have been completely drawn over the highest pulley 11 and the bunch of conductors C′, member 3 and transmission member 12 are beginning to pass over the pulley 11a underneath, having just passed the previous pulley. At the moment when member 3 passes pulley 11a, cable T3′ slides and falls and takes up position on the lowest pulley 11b. As before, the fall is shown in various stages, i.e.;

position I in which cable T3′ after sliding from pulley 11a, has fallen and abuts the guide 7 of the lowest bracket, and

position II, in which the cable T3′ rests on the lowest pulley 11b.

Cable T3′ is adapted next to draw a bundle of conductors like the preceding ones, but of course it is not necessary to draw other haulage cables at the same time.

All the stages described hereinbefore with reference to Figs. 4 to 7, which show the positioning and pulling of the haulage cables and conductors on the right side of the pylon relatively to the drawing, are exactly similar for the left side, either subsequently or simultaneously depending on the chosen operating conditions.

During the aforementioned stages reference has always been made to the motion of a balanced connecting member 3, directly drawn by the haulage cable. The last-mentioned cable is pulled while cord S pulls transmission member 12 and the bundle of conductors. This method is appropriate when it is desired to prevent a haulage cable travelling side by side with the conductors; in such cases cord S will be longer or at least equal in length to the length of cable between two pylons, so that the further haulage cable is moved, and consequently moved away from cord S, opposite a given pylon along the line, before transmission mmeber 12 has passed the preceding pylon.

Alternatively, if the preceding requirements do not apply, member 3 can be connected to the haulage cable and also directly connected to the bunch of conductors (via the rotary attachments 3d, 3e and 3f) and to the further haulage cable (via attachment 3g), thus avoiding the use of transmission member 12.

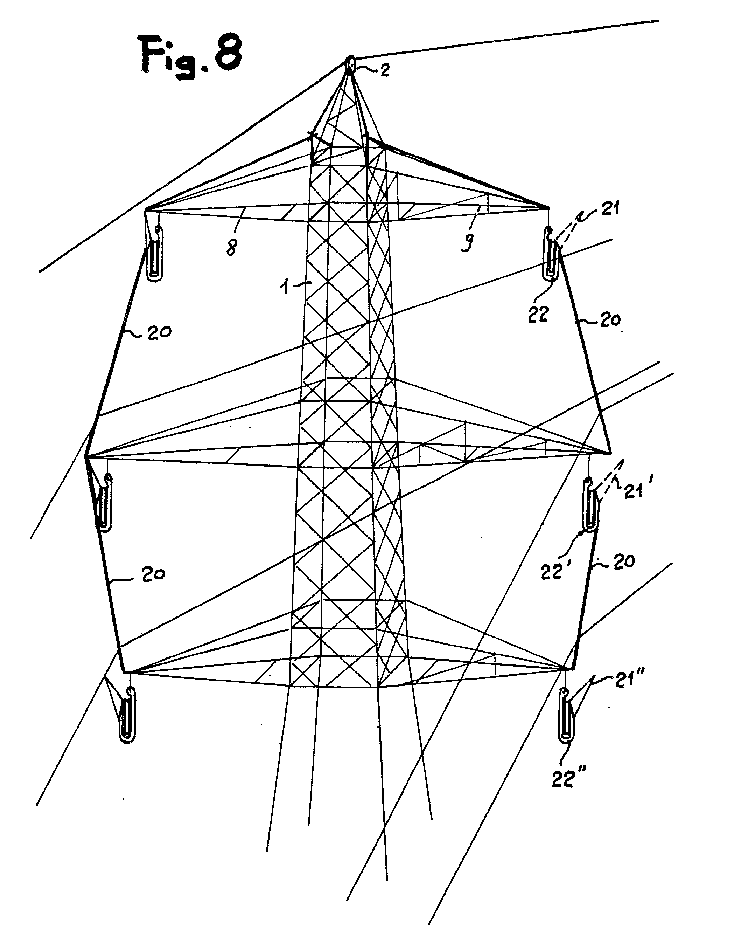

Fig. 8 shows a different embodiment in which single conductors are strung on a pylon of the same kind as shown in the preceding drawings.

In Fig. 8, the pylon is fitted with rods 20 and cables extending between each pulley 22 and the end of the bracket underneath it. Each pulley 22 is associated with an arm 21 which can take either a closed position (as shown on the left side of the pylon relative to the drawing) in which case a descending haulage cable will travel over pulley 22, or an open position (shown at the right of the pylon) when the cable or conductor will be guided inside the pulley.

The system shown in Fig. 8 can be used for stringing in various ways, some of which will be shown hereinafter. All of them start from an initial preliminary stage in which a pilot cord or haulage cable is positioned on the top pulleys 2 by the conventional method, by hand or by a helicopter.

A)—The first haulage cable is used to string three further haulage cables as already shown in the case of cables T1, T2 and G during the first stage of the process illustrated in Fig. 1. The central haulage cable remains on pulley 2, whereas the two side haulage cables are pulled and slide along the top and the first brackets, arms 21 and 21' of the top pulleys 22 and 22' being closed, so that the cables travel over pulleys 22, descend along the first rods 20, travel over the second pulleys 22', descend along the lower rods 20, and finally fall beyond the lowest bracket on to the arm 21" underneath and into pulley 22". During the motion of the cable, the bottom arms 21' open, whereas arms 21 remain closed. The central cable remains on pulleys 2 and the pull begins on three other haulage cables. In the same manner as shown previously, the central cable remains on pulleys 2 whereas the two side cables are run and slid downwards. They travel over the top pulleys 22, down the top rods 20 and, after travelling over the tip of the intermediate bracket, enter arm 21', which is now open, and are guided into the intermediate pulleys 22". During this second motion of the cables, the top arms 21' also open and, while the cable remains on pulleys 2, the pull begins on the guard cable and two further haulage cables. The guard cable remains positioned on pulleys 2, in order subsequentary to be secured at the top of the pylon, whereas the two further haulage cables are moved and slide along the top brackets on to the open arms 21 and are guided into the top brackets 22. When the haulage cables are positioned in each bracket, the conductors are strung in the usual manner.

Of course, instead of pulling six complete haulage cables in the described manner, service cords can be used for the stringing operations and directly coupled to the conductors.

B)—As an alternative to A), five haulage cables instead of three can be drawn during the first operation. The central cable is positioned on pulleys 2 whereas the other cables are conveyed, two on the left and two on the right of the pylon, and are guided in the previously-described manner over the intermediate pulleys 22' and bottom pulleys 22", arm 21' being opened immediately after the first of each pair of cables travels over it. Next, the cable which has remained on pulleys 2 is used to pull the guard cable and the two cables to be positioned on the top pulleys 22. Preferably the first five haulage cables are drawn by two balanced connecting members in succession: a first balanced connecting member drawing two haulage cables and a central service cord of reduced length, and a second balanced connecting member coupled to the service cord and pulling the other three haulage cables. This facilitates the stringing process and prevents two cables from sliding together over the same bracket and twisting.

C)—If a sufficiently powerful winch is available, another alternative consists in drawing six haulage cables and the guard cable simultaneously; the central guard cable is positioned on pulleys 2 whereas the haulage cables are drawn three to the right and three to the left of the pylon. In order properly to position the cables on pulleys 22, 22' and 22", the top arm 21 is opened immediately after two of the cables have run over it, whereas arm 21' is opened immediately after one cable has run over it.

In this case also it is preferable to use three balanced connecting members in rapid succession one after the other, as already explained in alternative B).

D)—Alternative methods can be used, as chosen by the skilled in the art, for simultaneously pulling five haulage cables and conductors. These other methods, if any, will of course be decided upon in accordance with the operating conditions and the available means, without modifying the essential features of the invention.

The aforementioned methods of stringing single conductors can of course also be used for stringing bundles of conductors. More particularly, instead of proceeding in the method indicated in Figs. 1 to 7, all six haulage cables can be positioned first, e.g. by one of the methods A) to D) hereinbefore, after which each haulage cable can be used to string a respective bundle of conductors in conventional manner in the preferred sequences.

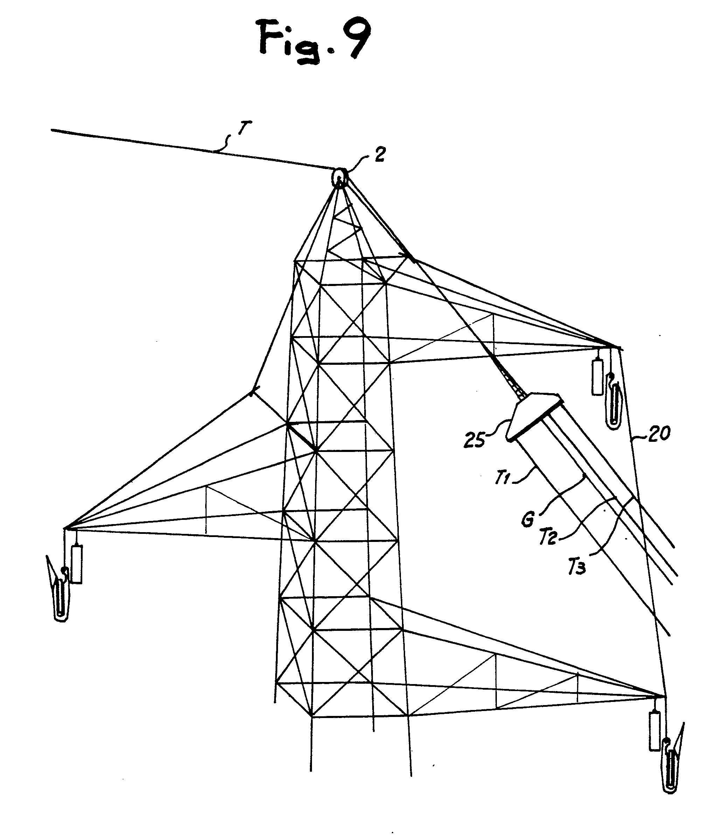

Figs. 9 to 11 show the sequence of operations according to the invention for stringing on an asymmetrical pylon having three brackets.

As shown in Fig. 9, a pilot cord is positioned in conventional manner, i.e. manually or by helicopter, on the top pulleys 2 and is replaced by a first cable T, which is used to pull the guard rope G and three further haulage cables T1, T2 and T3. The pull is applied via an asymmetrical balanced connecting member 25 diagrammatically shown in Fig. 9.

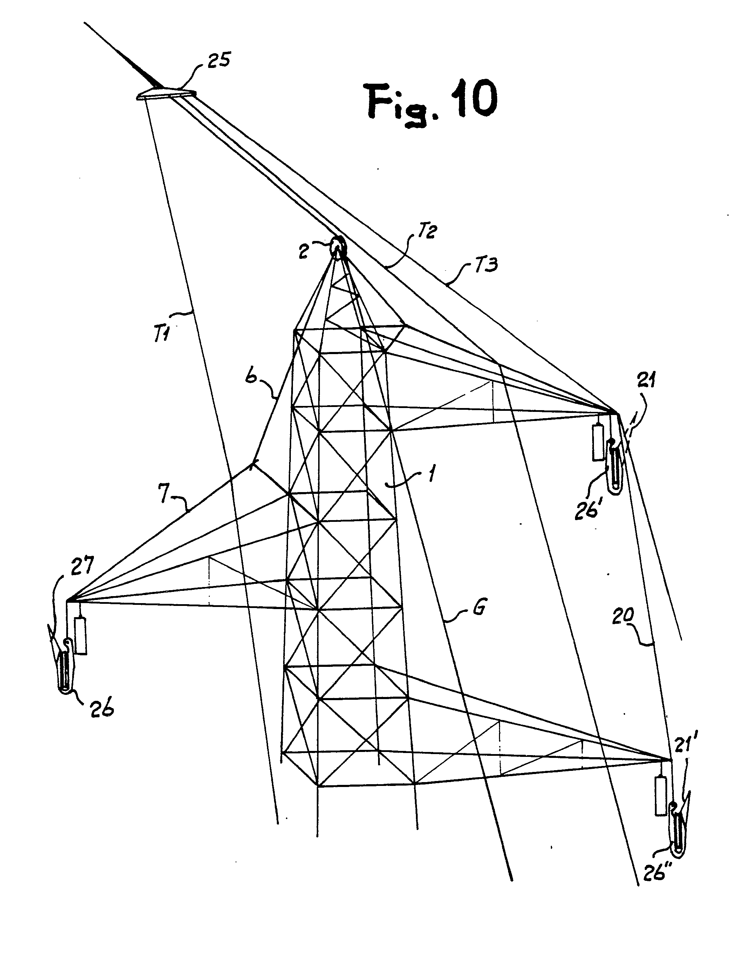

Fig. 10 shows the balance member 25 when it has just passed the top pulley 2. The guard cable G is thus positioned in the groove of pulley 2 in the previously-described manner. The three haulage cables are drawn one on one side and two on the other side of pylon 1.

Cable T1, which is drawn to the left of the pylon, descends along guides 6 and 7 until it reaches the end of the left bracket, from which it falls, guided by arm 27, into pulley 26.

Cables T2 and T3 descend along guides 6, 7 borne by the top right bracket to the end thereof, where a pulley 26' is secured with a closed arm 21 and a rod 20 completely similar to that illustrated in Fig. 8 is secured between pulley 26' and the bracket underneath. As soon as cable T3 has moved over the top bracket and arm 21 and pulley 26', arm 21 opens. Thus, whereas cable T3 slides down along rod 20 to fall on to the open arm 21' and be guided into pulley 26", cable T2 falls into arm 21, which is now open, and is guided into pulley 26".

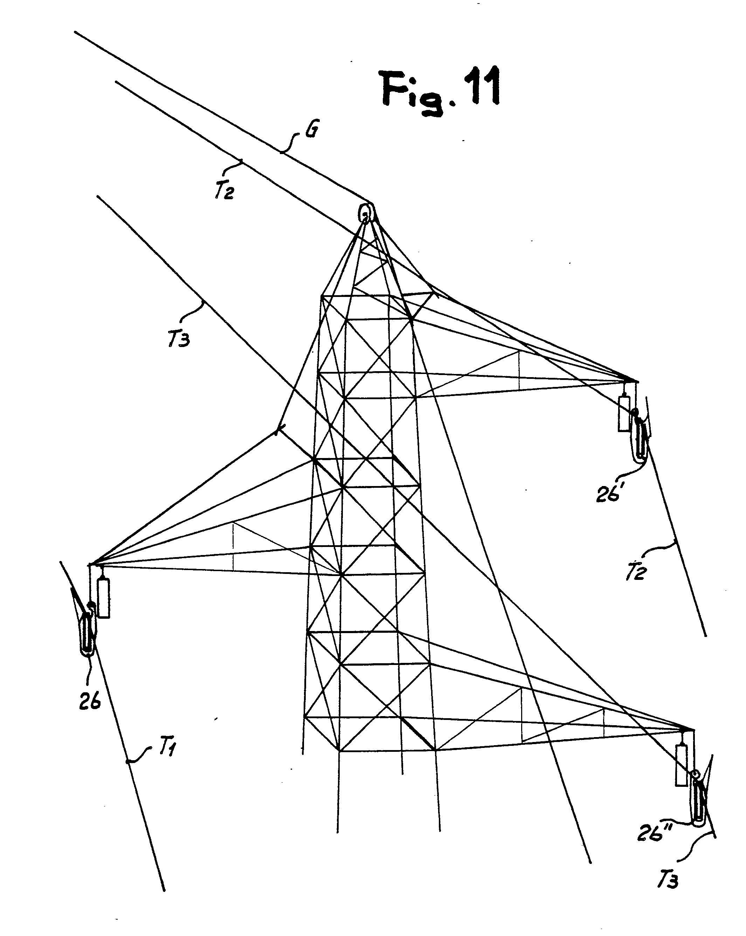

Fig. 11 shows the final position in which cables T1, T2 and T3 have been finally positioned in the respective pulleys 26, 26' and 26" and are ready to pull single conductors or bunches of conductors as required.

Of course, as already stated, instead of stringing haulage cables over the entire length of the line and then using them to string the conductors, the balanced connecting member 25 can be attached to service cables which are directly attached to conductors or bundles of conductors, the service cables performing the function of moving until they rest in the pulleys underneath.

As already stated it may be preferable, instead of attaching all three cables and the guard cable to the same balanced connecting member 25, to use a first balanced connecting member attached to cables T1 and T2 and a short central cable, which is attached to a second balanced connecting member for drawing the guard cable G and cable T2.

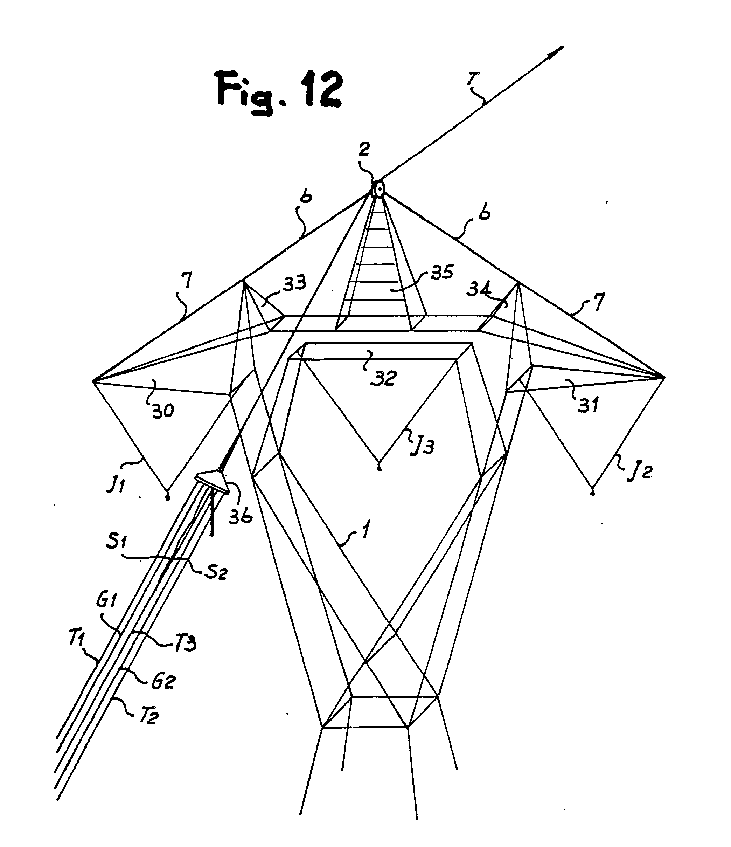

Figs. 12 to 14 show the sequence of operations according to the invention for stringing conductors over a Y-type pylon. As is known, in a pylon of this kind the conductors are suspended from insulators J1, J2, J3 borne by two side brackets 30, 31 and a central cross-member 32. The pylon also has two small tips 33, 34 each bearing a guard cable. According to the invention, an additional central tip 35 is positioned on the aforementioned known pylon and used exclusively for the system of stringing the conductors according to the invention, and is therefore preferably dismantled after the stringing operation has been completed.

Apex 35 bears the previously-described top pulleys 2 and is also secured to guides 6, which preferably run from pulley 2 to the top of apices 33 and 34, and guides 7, which run from apices 33, 34 to the outer ends of brackets 30, 31 respectively.

Stringing is performed as follows:

the first haulage cable is positioned on pulley 2 in the conventional manner as previously mentioned and is used to pull a balanced connecting member 36 secured to two guard cables G1, G2 and three haulage cables T1, T2 and T3.

Fig. 12 shows member 36 approaching pylon 1. Fig. 12 also shows how, according to an important feature of the invention, the central cable T3 is not pulled directly by member 36 but by a pair of service cables S1, S2 connected by joints which can easily be dismantled, and the purpose of which will be described in detail hereinafter.

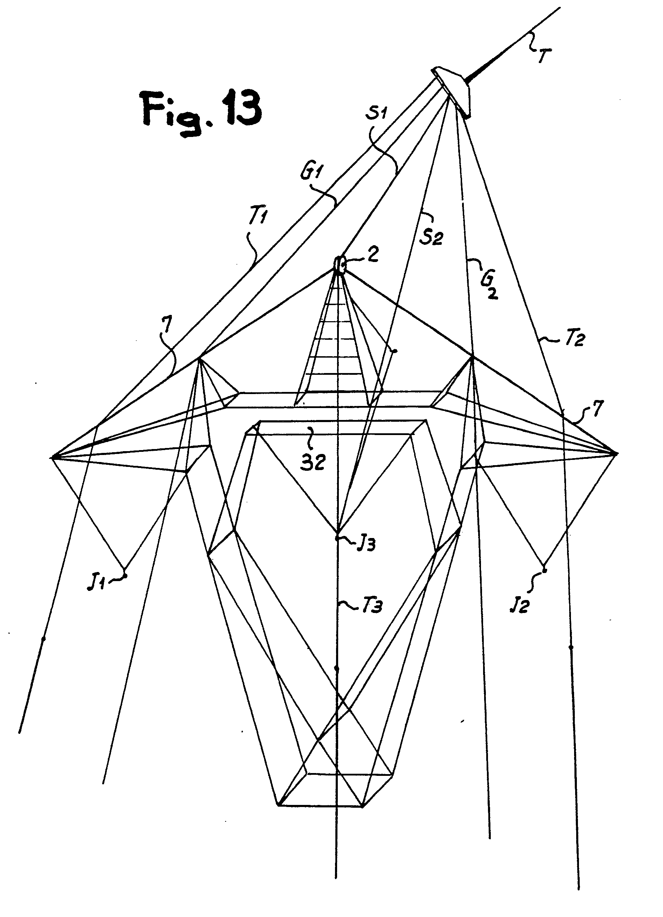

One service cable—cable S1 in the present case—is under tension, whereas the other is slack. Consequently, when member 36 travels over the pulley, only cable S1 remains on it, whereas (Fig. 13) guard cable G1 and haulage cable T1 are slid towards the left of the pylon, guard cable G2 and haulage cable T2 are slid towards the right of the pylon (relative to the drawing in all cases), whereas cable S2 can be slid either from the right or the left of pulley 2.

As soon as member 36 has passed pulley 2, the winch is temporarily stopped. An operator disconnects the slack cable S2 and conveys it below cross-member 32 and then re-secures it. The operator also, using special equipment, tensions cable S2 and consequently relaxes S1. Fig. 13 shows this exact moment, when cable S2 has just been re-attached and tensioned. Immediately afterwards, the operator releases cable S1, now slack, and conveys it under member 32 and reattaches it, at which point the pull can recommence.

As Fig. 13 also shows, cables T1 and T2 have been slid along guides 6 and after opening two small arms (not shown) at the top of apices 33, 34, bear against guides 7 above brackets 30 and 31; guard cables G1 and G2 have been slid along guides 6 and, since the arms are open, have taken up position on pulleys (not shown) at the top of apices 33 and 34.

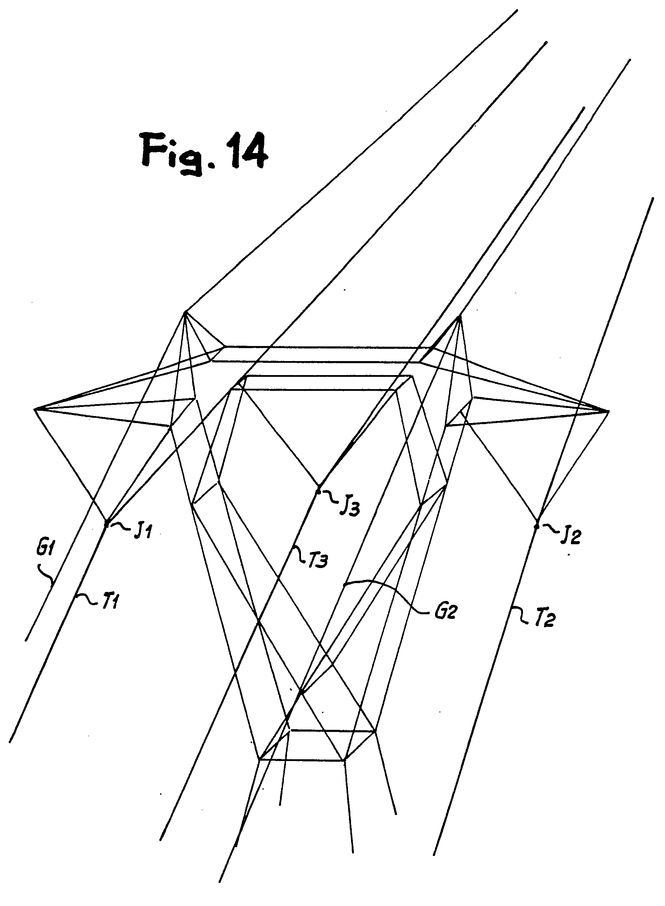

Finally Fig. 14 shows how, when member 36 moves further away from the pylon, haulage cables T1 and T2 slide along guides 7 and fall from brackets 30, 31 and are guided in the previously-described manner over arms (not shown) under the ends of the brackets, which guide them into corresponding pulleys (also not shown). Fig. 14 shows this final configuration, in which haulage cables T1, T2 are disposed in pulleys suspended from insulators J1 and J2, the central haulage cable T3 is disposed in a pulley suspended from insulator J3 and the guard cables G1, G2 are disposed in pulleys (like the preceding,

not shown) at the top of apices 33 and 34. As Fig. 14 also shows, the central apex 35 has been dismantled, since it is no longer necessary.

In this case also, instead of attaching the three haulage cables and the two guard cables to a single balanced connecting member 36, it may be preferable to use a first balanced connecting member to pull the two outer cables T1 and T2 and a central cable, which is attached to a second balanced connecting member for pulling the two guard cables and the central haulage cable T3.

Where only first haulage cables are used but also in the more general case where a pilot cord is used followed by a haulage cable, the balanced connecting members used for pulling will first be secured to the service cables, which will be adapted for sliding and moving from the top pulleys to the bottom pulleys, to which the conductors or bundles of conductors or haulage cables will subsequently be attached.

The advantages of the method according to the invention are considerable. In addition to the previously-mentioned main advantages of rapid performance, particularly on difficult or irregular routes, and of protecting the vegetation underneath, there is also a considerable reduction in the need for pilot cord, the power lines remain out of operation for only a short time, and owing to its low expense, as previously mentioned, the method of controlled stringing can be extended to less important lines, e.g. 150 kV. Other advantages can easily be seen by the skilled in the art.

The invention is not limited to the particular embodiments or procedures described, or to the only specific use which has been disclosed, but can have many variants, including uses, e.g. for telpher cables or the like.

## Claims

1. A method for stringing high-tension electric power lines on a set of pylons, in which method first haulage cable (T) is disposed on a first set of pulleys (2) having corresponding positions on the pylons;

one end of the first haulage cable (T) is coupled to one or more further haulage cables (T1, T2, T3) by one or more balanced connecting members (3, 25, 36);

the first haulage cable (T) is recovered from the other end of the set of pylons by running it over the first set of pulleys (2), thereby laying one of the hauled cables on those pulleys (2) and laying the other hauled cables (T1, T2, T3) in positions on the set of pylons from which each is transferable to a respective set of further sets of pulleys (11, 22, 26) to be used for drawing further cables; characterized in that

the pulleys (2) of said first set of pulleys (2) are mounted on the top of the pylons and,

while the balanced connecting members (3, 25, 36) move over the top pulleys (2) and said one of the hauled cables is guided into the race of each pulley (2) and rests on them, said further hauled cables (T1, T2, T3, G1, G2) are made to slide downwards only by force of gravity and traction until each of them, with the assistance of swivel-mounted guide means (10, 21), positions itself on a set of pulleys (11, 22, 26) suspended from pylon brackets (8, 9; 30, 31, 32) underneath the cable on the first set of pulleys (2), (Fig. 1—14).

2. A method as claimed in claim 1, in which as well as the further haulage cables (T1, T2) a conductor (G) is coupled to the first haulage cable (T) by the one or more balanced connecting members (3) characterized in that

the conductor (G) rests in the top pulleys;

whereas the further haulage cables (T1, T2) are made to slide on to the pulleys (11) suspended from the brackets (8, 9) immediately underneath;

then each further haulage cable (T1, T2) is used to pull a conductor or bundle of conductors (C) together with at least one further haulage cable (T3), for subsequently drawing underneath at least another conductor or bundle of conductors;

which process is repeated until the last necessary conductor and/or haulage cable (T3') laid on their respective set of pulleys (11b) (Fig. 1—7).

3. A method as in claims 1, characterized in that

the first haulage cable (T) is coupled by one balanced connecting member to three further haulage cables;

while the central one of these three cables rests in the top pulleys (2), the two other haulage cables are made to slide on to the pulleys (22", 26, 26") suspended from the lowest brackets of both sides of the pylons;

each of these further haulage cables is used to draw a conductor (C) or bundle of conductors (C) to be positioned on said pulleys (22", 26, 26") suspended from the lowest brackets of both sides of the pylons;

whereas, the central one of the three further haulage cables is used to pull another central cable or a guard cable (G) to be positioned on the top pulleys together with at least one other haulage cable for drawing at least another conductor (C) or bundle of conductors (C) to be positioned on the pulleys (22', 26') above the last-mentioned pulleys (22", 26, 26") (Fig. 8—11).

4. A method as in any of claims 1 to 3 in which, in order to draw simultaneously a further haulage cable (T3) and a conductor (C) or bundle of conductors (C), the preceding haulage cable (T1, T2) is connected to the further haulage cable (T3) and to a service cord (S) through a first balanced connecting member (3), the service cord (S) being further connected to the conductor or bundle of conductors (C) through a conventional transmission member (12).

5. A method as in claim 3 or 4, in which each haulage cable comprises a portion of service cord (S).

6. A method as in claims 4 or 5, in which each service cord (S) has a short length, preferably a length equal to the length of cable between two pylons.

7. A method as in any of claims 1 to 6, in which each further haulage cable is slid towards a lower pulley along guide means (6, 7, 20) associated with the pylon structure, whereas the swivel-mounted guide means (10, 21) are associated with the pulleys underneath.

8. A method as in claim 7, in which the guide means (6, 7, 20) associated with the pylon structure are removed after completed use.

9. A method as in claims 1, 2 or 7, in which the swivel-mounted guide means (10) associated with each higher pulley (11) are normally open and in operation to receive the first further haulage cable (T1, T2) guided downwards, and when the aforementioned cable (T1, T2) is received in the groove of the pulley (11), it tilts the guide means (10) into the closed or inoperative position, so that the next haulage cable (T3) guided downwards can move over the pulley (11) and fall into the pulley (11a) beneath (Fig. 1—7).

10. A method as in claims 1, 3 or 7, in which the swivel-mounted guide means (21) associated with each higher pulley (22) are normally in the closed inoperative position and the first haulage cable guided downwards slides over these pulleys (22, 26') and falls onto the lowest pulley (22', 26") and simultaneously opens the guide means, so that the next haulage cable guided downwards is received in the pulley (22', 26') immediately above. (Fig. 8—11).

11. A device for applying the method according to any of the preceding claims of the kind comprising a number of pulleys (11) for conveying haulage cables (T) and conductors (C), which are to be suspended from each bracket (8, 9) along each pylon in the line, each pulley (11) comprising a suspended frame (11a), on which one or more freely rotatable sheaves (15, 16, 17) are mounted for conveying the cables or conductors, characterised in that the suspended frame (11a) of each pulley (11) is open on one side for inserting a cable along an intermediate portion thereof. (Fig. 15).

12. A device as in claim 11, in which the suspended frame (11a) of each pulley (11) has substantially open shape in the form of a C or G.

13. A device as in claim 12, in which the open side of the frame is associated with swivel-mounted guide means comprising a sloping arm (10) extending downwards and towards the interior of the frame (11a) to guide the haulage cable (T) after it has fallen from the bracket (8, 9) above.

14. A device as in claim 13 in which the arms (10) are tiltable into the inoperative position after conveying the haulage cable (T) into the pulley (11).

15. A device as in claim 11, further comprising guide means (6, 7, 20) associated with the pylon structure and forming also elements for keeping the haulage cables at a distance from the pylon structure and protecting it.

16. A device as in claim 15, in which the guide means (20) associated with the pylon structure run between the base of each pulley (22) and the outermost end of the bracket underneath.

17. A device as in claim 16, in which the guide means comprise rods.

18. A device as in claim 17, in which the guide means comprise tubular rods mounted so as to be freely rotatable around their longitudinal axis on stationary holders associated with the pylon structure.

19. A device as in claim 16 in which the guide means comprise portions of stretched cable.

20. A device as in any of claims 16 to 19 in which the guide means also stabilize the pulley with which they are associated.

21. A device as in claim 11 also comprising a balanced connecting member in the form of a triangular plate (3a) for connecting a haulage cable to one or more further haulage cables and conductors (G, C) (Fig. 18a).

22. A device as in claim 21 in which the means for attaching the further haulage cables and conductors to the balanced connecting member and disposed symmetrically relative to the central or pulling axis of the balanced connecting member.

23. A device as in claim 22 in which the balanced connecting member has additional, asymmetrically disposed attachment means for attaching a further haulage cable to be drawn.

24. A device as in claim 21 or 22 in which the means for attaching further haulage cables and conductors are freely rotatable.

25. A device as in claim 21 in which the balanced connecting member is associated with a counter-weight for stabilizing it in a horizontal position.

26. A device as in claim 11 also comprising a top pulley (2) with a sheave having a groove opening upwardly above the top of the pylon.

27. A device as in claim 26 in which the top pulley (2) is mounted on the central point of the pylon.

28. A device as in claim 26 in which the top pulley is mounted on an apex temporarily placed at the centre of the top crossing of a Y pylon.

**Patentansprüche**

1. Verfahren zum Spannen von elektrischen Hochspannungsleitungen auf einen Sátz von Masten, dadurch gekennzeichnet, daß

ein erstes Transportseil auf einem ersten Satz von Rollen (2) an entsprechenden Positionen auf den Masten aufgebracht wird,

ein Ende des ersten Transportseiles (T) mit einem oder mehreren weiteren Transportseilen (T1, T2, T3) mittels eines oder mehreren ausgeglichenen Verbindungselementen (3, 25, 36) verbunden ist,

das erste Transportseil (T) von dem anderen Ende des Satzes von Masten durch deren Laufen über den ersten Satz von Rollen (2) wiedergewonnen wird, wodurch eines der transportierten Kabel auf diesen Rollen (2) gelegt wird und die anderen transportierten Kabel (T1, T2, T3) in Positionen auf dem Satz von Masten gelegt werden, von der jedes zu einem jeweiligen Satz von weiteren Sätzen von Rollen (11, 22, 26) überführbar sind, die zum Ziehen weiteren Kabel verwendet werden, dadurch gekennzeichnet, daß

die Rollen (2) des ersten Satzes von Rollen (2) auf den Spitze der Maste befestigt sind, und

bei dem Bewegen der ausgeglichenen Verbindungselemente (3, 25, 36) über die Rollen (2) und dem Führen eines der geführten Kabel in die Spur jeder der Rollen (2) und dem Ruhen in dieser, die weiter transportierten Kabel (T1, T2, T3, G1, G2) dazu veranlaßt werden, lediglich aufgrund der Schwerkraft und der Dehnung zum Herabgleiten veranlaßt werden, bis jedes von diesen mit Unterstützung von drehbar befestigten Führungselementen (10, 21) sich selbst auf einem Satz von Rollen (11, 22, 26) positionieren, die von Maststreben (8, 9; 30, 31, 32) unterhalb des Kabels auf dem ersten Satz von Rollen (2) herabhängen (Figur 1—14).

2. Verfahren nach Anspruch 1, wobei neben den weiteren Transportseilen (T1, T2) ein Leiter (G) mit dem ersten Transportseil (T) mittels eines oder mehrerer ausgeglichener Verbindungselemente (3) verbunden ist, dadurch gekennzeichnet, daß

der Leiter (G) in den oberen Rollen ruht,

während die weiteren Transportseile (T1, T2) dazu eingerichtet sind, auf die von den Streben (8, 9) unmittelbar unter diesen herabhängenden Rollen (11) zu gleiten,

sodann jedes der weiteren Transportseile (T1, T2) zum Ziehen eines Leiters oder eines Bündels von Leitern (G) zusammen mit wenigstens einem weiteren Transportseil (T3) verwendet wird zum nachfolgenden Zeihen unterhalb wenigstens eines weiteren Leiters oder eines weiteren Bündels von Leitern,

dieser Vorgang wiederholt wird, bis der letzte erforderliche Leiter und/oder das letzte Verbindungsseil (T3') über den jeweiligen Satz von Rollen (11b) gelegt ist (Figur 1—7).

3. Verfahren nach Anspruch 1, dadurch gekennzeichnet, daß

das erste Transportseil (T) mittels eines ausgeglichenen Verbindungselements mit drei weiteren Transportseilen verbunden ist,

das mittlere dieser drei Kabel in der oberen Rolle (2) ruht und die beiden anderen Transportseile dazu eingerichtet sind, auf die von der untersten Strebe auf beiden Seiten der Masten herab hängenden Scheiben (22", 26, 26") zu gleiten,

jedes der weiteren Transportseile dazu verwendet wird, einen auf die von den untersten Streben auf beiden Seiten der Maste berabhängende Rollen (22", 26, 26") zu positionierenden Leiter (G) oder Bündel von Leitern (C) zu ziehen,

wobei das mittlere der drei weiteren Transportseile dazu verwendet wird, ein weiteres mittlers Seil oder ein Führungsseil (G) zu ziehen, das auf den oberen Rollen gemeinsam mit wenigstens einem anderen Transportseil positioniert ist, zum Ziehen wenigstens eines weiteren Leiters (C) oder eines weiteren Bündels von Leitern (C), welcher bzw. welches auf die Scheiben (22', 26') zu bringen ist, über die eben erwähnten Scheiben (22", 26, 26") (Figur 8—11).

4. Verfahren nach einem der Ansprüche 1 bis 3, wobei zum gleichzeitigen Ziehen eines weiteren Transportseiles (T3) und eines Leiters (C) oder eines Bündels von Leitern (C) das vorangehende Transportseil (T1, T2) mit dem weiteren Transportseil (T3) und einer Bedienungsleine (S) über ein erstes ausgeglichenes Verbindungselement (3) verbunden ist, wobei die Bedienungsleine weiter mit dem Leiter oder einem Bündel von Leitern (C) über ein übliches Übertragungselement (12) verbunden ist.

5. Verfahren nach Anspruch 3 oder 4, dadurch gekennzeichnet, daß jedes Transportseil einen Abschnitt der Bedienungsleine (S) aufweist.

6. Verfahren nach Anspruch 4 oder 5, dadurch gekennzeichnet, daß die Bedienungsleine Kurz, vorzugsweise der Länge des Seiles zwischen zwei Masten entsprechend, ist.

7. Verfahren nach einem der Ansprüche 1 bis 6, wobei jedes weitere Transportseil entlang eines der Maststruktur zugehörigen Führungselements (6, 7, 20) auf die untere Scheibe gespannt wird, während die drehbar befestigten Führungselemente (10, 21) den unterhalb angeordneten Rollen zugehörig sind.

8. Verfahren nach Anspruch 7, wobei die der Maststruktur zugeordneten Führungselemente (6, 7, 20) nach Beendigung der Verwendung entfernt werden.

9. Verfahren nach Anspruch 1, 2 oder 7, wobei jedes einem der höheren Rollen (11) zugeordnete, drehbar befestigte Führungselement (10) normalerweise offen und zur Aufnahme des ersten, abwärts geführten weiteren Transportseiles (T1, T2) bereit ist und bei Aufnahme dieses Seiles (T1, T2) in der Kerbe der Rolle (11) dieses das Führungselement (10) in eine geschlossene oder gesperrte Stellung kippt, so daß das nächste abwärts geführte Transportkabel (T3) sich über die Rolle (11) bewegen kann und auf die unterhalb angeordnete Rolle (11a) fallen kanne (Figur 1—7).

10. Verfahren nach Anspruch 1, 3 oder 7, wobei jedes einem der höheren Rollen (11) zugeordnete, drehbar befestigte Führungselement (21) normalerweise in einer geschlossenen Stellung ist und das erste abwärts geführt Transportseil über diese Rollen (22, 26') gleitet und auf die unterste Rolle (22', 26) fällt und gleichzeitig das Führungselement öffnet, so daß das nachfolgend nach unten geführte Transportseil von dem unmittelbar darüberleigenden Rolle (22', 26) aufgenommen wird (Fig. 8—11).

11. Vorrichtung zur Durchführung des Verfahrens nach einem der vorangehenden Ansprüche, mit einer Anzahl von Rollen (11) zum Aufnehmen der Transportseile (T) und der Leiter (C), die in einer Reihe von den Streben (8, 9) entlang jedes Mastes herabhängen, wobei jede Scheibe (11) einen hängenden Rahmen (11a) aufweist, auf dem eine oder mehrere frei drehbare Seilscheiben (15, 16, 17) zum Aufnehmen der Seile oder Leiter befestigt sind, dadurch gekennzeichnet, daß der hängende Rahmen (11a) jeder der Rollen (11) auf einer Seite zum Einführen eines Seiles entlang eines mittleren Abschnittes von diesem offen ist (Figur 15).

12. Vorrichtung nach Anspruch 11, wobei der hängende Rahmen (11a) jeder Scheibe (11) im wesentlichen in der Forme eines C oder G offen ist.

13. Vorrichtung nach Anspruch 12, wobei die offene Seite des Rahmens drehbar befestigten Führungselementen zugehörig ist, die einen sich nach unten und in Richtung auf das Innere des Rahmens (11a) weisenden schrägenden Arm (10) zum Führen des Transportkabels (T) nach dessen Abfallen von der Strebe (8, 9) aufweisen.

14. Vorrichtung nach Anspruch 13, wobei die Arme (10) in eine gesperrte Sellung kippbar sind, nachdem das Transportkabel (T) in die Rolle (11) gebracht ist.

15. Vorrichtung nach Anspruch 11, gekennzeichnet durch der Maststruktur zugehörige Transportmittel (6, 7, 20), die auch Elemente zur Halten der Führungsseile auf Abstand von der Maststruktur und zu deren Schutz bilden.

16. Vorrichtung nach Anspruch 15, wobei die der Maststruktur zugehörigen Führungsmittel (20) zwischen der Basis jeder Rolle (22) und dem äußeren Ende der unteren Strebe verlaufen.

17. Vorrichtung nach Anspruch 16, dadurch gekennzeichnet, daß die Führungsmittel Stangen aufweisen.

18. Vorrichtung nach Anspruch 17, wobei die Führungsmittel ringförmige Stangen aufweisen, die so befestigt sind, daß sie frei um ihre Längsachse auf der Maststruktur zugehörigen ortsfesten Haltern drehbar sind.

19. Vorrichtung nach Anspruch 16, wobei die Führungsmittel Abschnitte eines gestreckten Seiles aufweisen.

20. Vorrichtung nach einem der Ansprüche 16 bis 19, wobei die Führungsmittel weiter die zugehörige Rolle stabilisieren.

21. Vorrichtung nach Anspruch 11, weiter mit einem ausgeglichenen Verbindungselement in Form einer dreieckigen Platte (3a) zum Verbinden eines Transportseiles mit einem oder mehreren Transportseilen oder Leitern (G, C) (Figur 18a).

22. Vorrichtung nach Anspruch 21, wobei die Mittel zum Anbringen der weiteren Transportseile und Leiter an das ausgelichenene Verbindungselement relativ zu der mittleren oder Zugachse des ausgeglichenen Verbindungselements symmetrisch angeordnet sind.

23. Vorrichtung nach Anspruch 22, wobei das ausgeglichene Verbindungselement zusätzliche, asymmetrisch angeordnete Befestigungselemente zum Anbringen eines weiteren zu ziehenden Transportseiles aufweist.

24. Vorrichtung nach Anspruch 21 oder 22, wobei die Mittel zur Anbringung weiterer Transportkabel oder Leiter frei drehbar sind.

25. Vorrichtung nach Anspruch 21, wobei das ausgelichene Verbindungselement mit einem Gegengewicht zu dessen Stabilisierung in einer horizontalen Position versehen ist.

26. Vorrichtung nach Anspruch 11, weiter mit einer oberen Rolle (2) mit einer Scheibe, die mit einer sich nach oben oberhalb der Spitze des Mastes öffnenden Kerbe versehen ist.

27. Vorrichtung nach Anspruch 26, wobei die obere Rolle (2) auf dem Mittelpunkt des Mastes befestigt ist.

28. Vorrichtung nach Anspruch 26, wobei die obere Rolle auf einer zeitweise auf dem Mittelpunkt des Spitzenkreuzes eines Y-Mastes angebrachten Spitze befestigt ist.

**Revendications**

1. Méthode pour poser des lignes de puissance électriques à haute tension sur un ensemble de pylônes, méthode dans laquelle:

un premier câble de traction (T) est disposé sur un premier ensemble de poulies (2) ayent des positions correspondantes sur les pylônes:

une extrémité du premier câble de traction (T) est relié à un ou plusieurs autre câbles de traction (T1, T2, T3) par un ou plusieurs éléments de liaison équilibrés (2, 25, 36);

le premier câble de traction (T) est récupéré depuis l'autre extrémité de l'ensemble de pylônes en le faisant circuler sur le premier ensemble de poulies (2), pour ainsi étendre l'un des câbles tractés sur ces poulies (2) et étendre les autres câbles tractés (T1, T2, T3) dans des positions sur l'ensemble de pylônes depuis lesquelles chacun peut être transféré vers un ensemble respectif parmi plusieurs autres ensembles de poulies (11, 22, 26) aptes à être utilisées pour tirer d'autres câbles: caractérisée en ce que

les poulies (2) du premier ensemble de poulies (2) son montées au sommet des pylônes, et pendant que les éléments de liaison équilibrés (3, 25, 36) se déplacent sur les poulies de sommet (2) et que ledit un des câbles tractés est guidé dans la gorge de chaque poulie (2) et repose sur celle-ci, lesdits autres câbles tractés (T1, T2, T3, G1, G2) sont amenés à glisser vers le bas seulement par la force de gravité et par traction jusqu'à ce que chacun d'eux, avec l'aide de moyens de guidage montés pivotants (10, 21), se mette en place de lui-même sur un ensemble de poulies (11, 22, 26) suspendues à des supports (8, 9, 30, 31, 32) au dessous du câble situé sur le premier ensemble de poulies (2). (Fig. 1—14).

2. Méthode selon la revendication 1, dans laquelle, avec les autres câbles de traction (T1, T2), un conducteur (G) est relié au premier câble de traction (T) par le ou lesdits éléments de liaison équilibrés (3), caractérisée en ce que

le conducteur (G) repose dans les poulies de sommet;

tandis que les autres câbles de traction (T1, T2) sont amenés à glisser sur les poulies (11) suspendues aux bras (8, 9) immédiatement au dessous;

chaque câble de traction (T1, T2) est ensuite utilisé pour tirer un conducteur ou un faisceau de conducteurs (C) conjointement avec au moins un autre câble de traction (T3), pour tirer subséquemment au dessous au moins un autre conducteur ou faisceau de conducteurs;

ce processus est répété jusqu'à ce que le dernier conducteur et/ou câble de traction (T3) nécessaire soient étendus sur leur ensemble de poulies respectif (11b). (Fig. 1—7).

3. Méthode selon la revendication 1, caractérisée en ce que

le premier câble de traction (T) est relié par un seul élément de liaison équilibré aux trois autres câbles de traction;

pendant que celui parmi ces trois câbles qui est au centre repose dans les poulies de sommet (2), les deux autres câbles de traction sont amenés à glisser sur les poulies (22″, 26, 26″) suspendues aux bras les plus bas de chaque côte des pylônes;

chacun de ces autres câbles de traction est utilisé pour tirer un conducteur (C) ou un faisceau de conducteurs (C) devant être mis en place sur lesdites poulies (22″, 26, 26″) suspendues aux bras les plus bas de chaque côté des pylônes;

tandis que celui parmi les trois autres câbles de traction qui est au centre est utilisé pour tirer un autre câble central ou un câble de garde (G) devant être mis en place sur les poulies de sommet conjointement avec au moins un autre câble de traction pour tirer au moins un autre conducteur (C) ou faisceau de conducteurs (C) devant être mis en place sur les poulies (22′, 26′) au dessus des poulies mentionnées en dernier (22″, 26, 26″) (Fig. 8—11).

4. Méthode selon l'une quelconque des revendications 1 à 3, dans laquelle, afin de tirer simultanément un autre câble de traction (T3) et un conducteur (C) ou faisceau de conducteurs (C), le câble de traction précédent (T1, T2) est relié à l'autre câble de traction (T3) et à un cordon de service (S) par l'intermédiaire d'un premier élément de liaison équilibré (3), le cordon de service (S) étant également relié au conducteur ou faisceau de conducteurs (C) par l'intermédiaire d'un élément de transmission conventionnel (12).

5. Méthode selon la revendication 3 ou 4, dans laquelle chaque câble de traction comprend une portion de cordon de service (S).

6. Méthode selon la revendication 4 ou 5, dans laquelle chaque cordon de service a une courte longueur, de préférence une longueur égale à la longueur de câble entre deux pylônes.

7. Méthode selon l'une quelconque des revendications 1 à 6, dans laquelle chaque autre câble de traction est amené à coulisser vers une poulie plus basse le long de moyens de guidage (6, 7, 20) associés à la structure du pylône, tandis que les moyens de guidage montés pivotants (10, 21) sont associés aux poulies situées au dessous.

8. Méthode selon la revendication 7, dans laquelle les moyens de guidage (6, 7, 20) associés à la structure du pylône sont retirés après la fin de leur utilisation.

9. Méthode selon la revendication 1, 2 ou 7, dans laquelle les moyens de guidage montés pivotants (10) associés à chaque poulie la plus haute (11) sont normalement ouverts et opérationnels pour recevoir le premier autre câble de traction (T1, T2) guidé vers le bas, et lorsque le câble susmentionné (T1, T2) est reçu dans la gorge de la poulie (11), il fait basculer les moyens de guidage (10) en position fermée ou inactive, de telle sorte que le câble de traction suivant (T3) guidé vers le bas peut se déplacer au dessus de la poulie (11) et tomber sur la poulie (11a) située au dessous (Fig. 1—7).

10. Méthode selon la revendication 1, 3 ou 7, dans laquelle les moyens de guidage montés pivotants (21) associés à chaque poulie la plus haute (22) sont normalement en position fermée non opérationnelle et le premier câble de traction guidé vers le bas glisse au dessus de ces poulies (22, 26′) et tombe sur la poulie la plus basse (22′, 26″) et ouvre simultanément les moyens de guidage, de telle sorte que la câble de traction suivant, guidé vers le bas, est reçu dans la poulie (22′, 26′) située immédiatement au dessus (Fig. 8—11).

11. Dispositif pour la mise en oeuvre de la méthode selon l'une quelconque des revendications précédentes, du type comprenant un certain nombre de poulies (11) pour acheminer des câbles de traction (T) et des conducteurs (C), qui doivent être suspendus à chaque bras (8, 9) le long de chaque pylône de la ligne, chaque poulie (11) comprenant une ossature suspendu (11a) sur laquelle un ou plusieurs réas libres en rotation (15, 16, 17) sont montés pour acheminer les câbles ou les conducteurs, caractérisé en ce que l'ossature suspendue (11a) de chaque poulie (11) est ouverte d'un côté pour insérer un câble le long d'une partie intermédiaire de celui-ci. (Fig. 15).

12. Dispositif selon la revendication 11, dans lequel l'ossature suspendue (11a) de chaque poulie (11) a une conformation sensiblement ouverte en forme de C ou de G.

13. Dispositif selon la revendication 12, dans lequel le côté ouvert de l'ossature est associé à des moyens de guidage montés pivotants comprenant bras incliné (10) s'étendant vers le bas et vers l'intérieur de l'ossature (11a) pour guider le câble de traction (T) après sa chûte depuis le bras (8, 9) situé au dessus.

14. Dispositif selon la revendication 13, dans lequel les bras (10) peuvent basculer jusqu'à leur position inactive après avoir amené le câble de traction (T) dans la poulie (11).

15. Dispositif selon la revendication 11, comprenant également des moyens de guidage (6, 7, 20) associés à la structure du pylône et définissant également des éléments pour maintenir les câbles de traction à distance de la structure du pylône et le protéger.

16. Dispositif selon la revendication 15, dans lequel les moyens de guidage (20) associés à la structure de pylône s'étendent entre la base de chaque poulie (22) et l'extrémité la plus extérieure du bras situé au dessous.

17. Dispositif selon la revendication 16, dans lequel les moyens de guidage comprennent des tiges.

18. Dispositif selon la revendication 17, dans lequel les moyens de guidage comprennent des tiges tubulaires montées de manière à être libres en rotation autour de leur axe longitudinal sur des supports fixés associés à la structure du pylône.

19. Dispositif selon la revendication 16, dans lequel les moyens de guidage comprennent des portions de câble tendu.

20. Dispositif selon l'une quelconque des revendications 16 à 19, dans lequel les moyens de guidage stabilsent également la poulie à laquelle ils sont associés.

21. Dispositif selon la revendication 11, comprenant également un élément de liaison équilibré sous la forme d'une plaque triangulaire (3a) pour relier un câble de traction avec un ou plusieurs autres câbles de traction et conducteurs (G, C). (Fig. 18a).

22. Dispositif selon la revendication 21, dans lequel les moyens pour attacher les autres câbles de traction et conducteurs à l'élément de liaison équilibre sont disposés symétriquement par rapport à l'axe central ou de traction de l'élément de liaison équilibré.

23. Dispositif selon la revendication 22, dans lequel l'élément de liaison équilibré comporte des moyens d'attache supplémentaires, disposés de façon asymétrique, pour attacher un autre câble de traction à tirer.

24. Dispositif selon la revendication 21 ou 22, dans lequel les moyens pour attacher d'autres câbles de traction et conducteurs sont libres en rotation.

25. Dispositif selon la revendication 21, dans lequel l'élément de liaison équilibré est associé à un contre-poids pour le stabiliser dans une position horizontale.

26. Dispositif selon la revendication 11, comprenant également une poulie de sommet (2) munie d'un réa comportant une gorge s'ouvrant vers le haut au dessus du sommet du pylône.

27. Dispositif selon la revendication 26, dans lequel la poulie de sommet (2) est montée sur le point central du pylône.

28. Dispositif selon la revendication 26, dans lequel la poulie de sommet est montée sur un sommet placé temporairement au centre de la traverse supérieure d'un pylône et Y.

Fig.1

Fig. 2

Fig.3

Fig.4

# Fig. 5

# Fig. 6

# Fig.7

# Fig. 8

# Fig. 9

# Fig. 10

# Fig. 11

G

T₂

T₃

26'

T₂

26

T₁

26"

T₃

# Fig. 12

Fig. 13

Fig. 14

# Fig. 15

# Fig. 16a

# Fig. 16b

# Fig. 17a

# Fig. 17b

Fig. 18 a

Fig. 18 b